# EUROPEAN PATENT SPECIFICATION

(11) **EP 2 198 579 B1**
(45) Date of publication and mention of the grant of the patent: **26.01.2011**
(21) Application number: 08803654.6
(22) Date of filing: 04.09.2008
(51) Int. Cl.: H04L 29/06

(54) **PROTOCOL FOR ENABLING DYNAMIC AND HIERARCHICAL INTERCONNECTION OF AUTONOMOUS FEDERATIONS OF ENTERPRISE SERVICE**
PROTOKOLL ZUR ERMÖGLICHUNG EINER DYNAMISCHEN UND HIERARCHISCHEN VERBINDUNG AUTONOMER FÖDERATIONEN DES UNTERNEHMENSDIENSTES
PROTOCOLE AUTORISANT UNE INTERCONNEXION DYNAMIQUE ET HIÉRARCHIQUE DE FÉDÉRATIONS AUTONOMES DE SERVICES D'ENTREPRISE

(30) Priority: 13.09.2007 US 854940
(43) Date of publication of application: 23.06.2010
(73) Proprietor: International Business Machines Corporation, Armonk, NY 10504 (US)
(72) Inventor: CALLAWAY, Robert David, Holly Springs, North Carolina 27540 (US); RODRIGUEZ, Adolfo Francisco, Raleigh, North Carolina 27613 (US); VINIOTIS, Ioannis, Cary, North Carolina 27518 (US); BROWN, Kyle Gene, Apex, North Carolina 27502 (US); ROBINSON, Richard, West Midlands B13 9UL (GB)
(74) Representative: Pyecroft, Justine Nicola C.
(86) International application number: PCT/EP2008/061684
(87) International publication number: WO 2009/034005

(56) References cited:
- WO-A-2006/069440
- US-A1- 2005 259 655

## Description

### BACKGROUND OF THE INVENTION

In computing, an enterprise service bus serves as the integration platform within service-oriented architectures. The enterprise service bus (ESB) refers to an abstraction layer on top of an implementation of an enterprise messaging system that attempts to remove the coupling between the messaging service called and the transport medium. The ESB may be implemented as software or as a hardware device. The ESB is responsible for, along with many other functions, enforcement of policies, routing of service requests, and performing content and/or transport protocol transformation. There are numerous technical and business issues which affect the choice of topology for the deployment of ESBs.

It is often desirable to have multiple ESB deployments federate with one another to provide a distributed integration platform that promotes the reuse of services within the enterprise. The term federation refers to a group of two or more ESB deployments that share at least some routing state. The goal of federation is to provide a logically centralized (at an appropriate scope) integration infrastructure across different geographic and business boundaries.

There is a practical need for interconnecting such autonomous federations of ESBs; the need arises, for example, in B2B environments, in which separate enterprises have to interact to provide a service to each other or to create a composite service to be offered to an external customer. The same need arises even within a single but large enterprise (e.g., in an e-government setting), when the enterprise itself is organized as multiple, autonomous, and heterogeneous federations of ESBs. With current technology, there is a large amount of manual configuration that must occur in order to deploy a service, connect it to an ESB, and finally to enable consumers throughout an enterprise to invoke the service. For example, service endpoint interface documents (i.e. WSDL, XSD, etc) must be manually written (or generated from tooling). Then the local ESB must be configured to host the service endpoint, and mediation flows are defined manually for the service. Policy documents would also be created at this point which would define exactly who, when, and how the service could be invoked. The combined set of service metadata is then manually committed to the local registry. These manual configuration steps are not addressed by this disclosure; rather we list them to fully pinpoint the complexity of the interconnected ESB system at three levels: (a) a single ESB, (b) federation of ESBs, and, (c) interconnection of multiple, disparate, autonomous federations of ESBs.

Assuming that one or more services have already been manually deployed and hosted through an ESB, there are three known solutions to federate ESB deployments together to support reuse of services throughout an enterprise: manual configuration, utilizing a broker ESB, or deploying a centralized service registry. The same approaches could, in theory, apply to interconnect autonomous federations of ESBs.

One way of federating ESBs (at either the second or the third level described above) is by manually configuring functionality within an ESB that serves as a "proxy" to other ESBs in the federation. For each service that is managed by a remote ESB, a mediation on the ESB must be defined that selects appropriate requests to be forwarded to the remote ESB, performs necessary content/protocol transformations, and then forwards the request onto the remote ESB. Matching mediations must exist on remote ESBs in order to support bidirectional communication in this case. Since this configuration must be done manually by a systems administrator at each ESB, the configuration of such a solution is tedious and prone to error (for S services and N ESBs, there are possibly SN proxies to be configured). There is also no mechanism to change the properties of this mediation based on changes in network or service availability. Manual configuration allows basic federation of multiple ESBs; however, this is an inflexible and impractical solution for large scale enterprises.

Rather than statically defining the routing mediations at each ESB, a separate ESB called a "broker" ESB can be deployed whose sole function is to implement the requisite mediations to support the federation. This helps to consolidate the many different mediations that might exist in the manually configured solution described above into a single ESB. However, this consolidation is still dependent on a systems administrator to manually define the mediations required for each service (in this case, the number of proxies to be configured is minimized to S). Since there is no mechanism to update the mediation metadata based on dynamic service availability, the broker ESB solution is inflexible. The broker ESB then becomes the architectural bottleneck, which introduces issues with scalability and fault tolerance.

The final known approach is to deploy a centralized registry for the entire enterprise. When ESBs need to route service requests to other ESBs, the ESBs consult a central registry at runtime to make a forwarding decision based on the current location of a service instance, thus addressing the manual configuration concerns raised by the previous solutions (as with the broker ESB, the number of entries in the centralized registry is equal to the number of services). However, centralizing all service metadata and status into a single registry forces the registry to be the architectural bottleneck in such a federated system, causing concerns with system performance, scalability, and fault tolerance. The centralized registry is ideal from the standpoint of the consolidation of service information, but is infeasible in many realistic business scenarios due to B2B interactions, disparate geographical locations, and limitations imposed by business structures. Today, manual configuration of the centralized registry is required to insert/update/delete service metadata, which limits the flexibility of this solution.

In summary, the existing approaches to federating ESBs require tedious manual configuration, which is prone to errors and inflexible to dynamic IT environments. The broker ESB and centralized registry approaches require the consolidation of service metadata into a centralized location, which causes concerns with scalability and reliability of the integration infrastructure. Prior-art document WO 2006/069440 discloses such a method.

### BRIEF SUMMARY OF THE INVENTION

In a method and system for creating an interconnection between autonomous enterprise service buses (ESB) federations, each one of the ESB federations comprise at least one ESB deployment, which further include a plurality of ESB nodes that provide connectivity to one or more services. According to a protocol, a first ESB node is designated in each of the ESB federations as a boundary node that is responsible for establishing and maintaining an interconnection between at least two of the ESB federations. Advertisement messages are transmitted between the boundary nodes that include routing information. In response to receiving the advertisement messages, each of the boundary nodes store the routing information received from other boundary nodes in respective distributed registries to create a local view of rout able service endpoints in the federation. Each of the boundary nodes then use the respective distributed registries to make routing decisions when routing service requests.

According to the method and system disclosed herein in accordance with a preferred embodiment, a routing/management protocol is provided for enabling the federation of enterprise service buses in a dynamic and scalable manner. The protocol preferably creates a distributed service registry and may synchronize relevant service metadata amongst ESB deployments as appropriate under defined business policies.

According to one aspect, there is provided an interconnected enterprise service bus federation system comprising: a plurality of enterprise service bus (ESB) federations, each one of the ESB federations comprising at least one ESB deployment, the at least one ESB deployment comprising: one or more ESB nodes, each providing connectivity to one or more services, including routing messages among the services; a respective distributed registry maintained by each of the ESB nodes; a boundary node in each ESB federation; and a first protocol used by the boundary nodes, wherein according to the first protocol, the boundary nodes function to: transmit advertisement messages between the boundary nodes that include routing information; in response to receiving the advertisement messages, store the routing information received from other boundary nodes in the respective distributed registries to create a local view of routable service endpoints in the federation; and use the respective distributed registries to make routing decisions when routing service requests.

According to another aspect, there is provided an executable software product stored on a computer-readable medium containing program instructions for creating an interconnection between autonomous enterprise service buses (ESB) federations, each one of the ESB federations comprising at least one ESB deployment comprising a plurality of ESB nodes that provide connectivity to one or more services, the program instructions for: designating a first ESB node in each of the ESB federations as a boundary node that is responsible for establishing and maintaining an interconnection between at least two of the ESB federations; transmitting advertisement messages between the boundary nodes that include routing information; in response to receiving the advertisement messages, storing by each of the boundary nodes, the routing information received from other boundary nodes in respective distributed registries to create a local view of routable service endpoints in the federation; and using by each of the boundary nodes, the respective distributed registries to make routing decisions when routing service requests.

### BRIEF DESCRIPTION OF THE DRAWINGS

Preferred embodiments of the present invention will now be described, by way of example only, and with reference to the following drawings:
FIG. 1 is a logical block diagram illustrating an enterprise service bus deployment in accordance with an exemplary embodiment.
FIG. 2 is a flow diagram illustrating a process for creating a federation of ESBs using the protocol of the exemplary embodiment.
FIGS. 3 and 4 are diagrams showing example topologies for ESB federations that may align with common business structures.
FIGS. 5A and 5B are block diagrams illustrating example topologies of interconnected federated ESB deployments.
FIG. 6 is a flow diagram illustrating an example process for creating an interconnection between autonomous ESB federations.
FIGS. 7-14 are diagrams showing example Inter-Federation protocol advertisement message formats, and how the protocol can be utilized to establish and maintain the distributed service registry.
FIG. 15 is a flow diagram showing, in accordance with a preferred embodiment, the process for using the distributed service registry to enable the routing/forwarding of service requests among the interconnected ESB federations.

### DETAILED DESCRIPTION OF THE INVENTION

The present invention relates, in accordance with a preferred embodiment, to a protocol for enabling dynamic and hierarchical interconnection of autonomous federations of enterprise service buses. The following description is presented to enable one of ordinary skill in the art to make and use the invention and is provided in the context of a patent application and its requirements. Various modifications to the preferred embodiments and the generic principles and features described herein will be readily apparent to those skilled in the art.

The preferred embodiment provides a routing/management protocol for enabling the interconnection of federated enterprise service buses in a dynamic and scalable manner. The routing/management protocol enables creation of ESB federations having topologies that may align with business structures and that may automatically respond to changes in network and/or service conditions. The exemplary embodiment is based upon the concept of using the routing/management protocol and a distributed service registry to synchronize relevant service metadata amongst federated ESB deployments as appropriate under defined business policies.

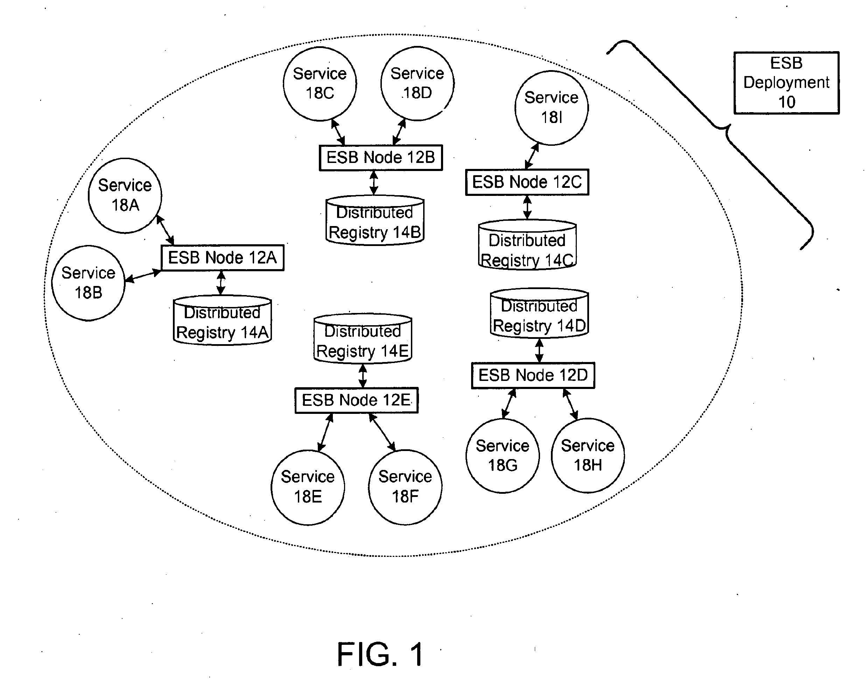

FIG. 1 is a logical block diagram illustrating a federation of enterprise service buses in accordance with an exemplary embodiment. An enterprise service bus (ESB) deployment 10 may include one or more ESB nodes 12A through 12E (collectively referred to as ESB nodes 12). The ESB nodes 12 are each individually responsible for providing virtualized connectivity to one or more instances of services 18A-18I (collectively referred to as services 18), including the routing of messages among the various services 18, such as service request messages. The ESB nodes 12 could be implemented as hardware or software-based ESB products, or XML/Web Services intermediaries. In this embodiment of the ESB deployment 10, all of the ESB nodes 12 may be treated as having the same local governance scope to collectively be one ESB deployment 10.

According to one aspect of the exemplary embodiment, a routing/management protocol is used by each of the ESB nodes 12 to allow the ESB nodes 12 to disseminate and share their routing and service state information with other ESB nodes 12. According to another aspect of the exemplary embodiment, each of the ESB nodes 12 may maintain its own respective distributed registry 14A through 14E (collectively referred to as a distributed service registry 14) to store the shared routing and service state information received from the other ESB nodes 12. The state information stored in each of the distributed registries 14 may include each ESB node's reachable neighbors and the services 18 run by each of those neighbors. Thus, the routing/management protocol and the distributed registry 14 of the exemplary embodiment can be used to enable dynamic and scalable federation of ESBs. As used herein a federation of ESBs may refer to an architecture where two or more ESB deployments 10 share routing state information, including routable service endpoints in the federation.

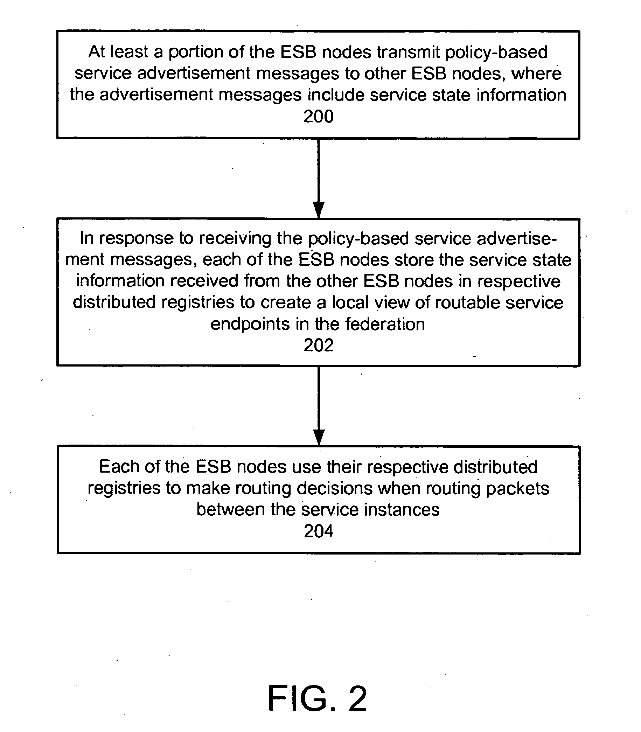

FIG. 2 is a flow diagram illustrating a process for creating a federation of ESBs using the routing/management protocol of the exemplary embodiment. The routing/management protocol allows ESB nodes 12 that are members of the federation to create a distributed service registry 14 as follows. At least a portion of the ESB nodes 12 transmit policy-based service advertisement messages to other ESB nodes 12, where the service advertisement messages include service state information (block 200). In response to receiving the state information from the other ESB nodes 12, each of the ESB nodes 12 stores the service state information received from the other ESB nodes 12 in the respective distributed registries 14A-14E to create a local view of routable service endpoints in the federation (block 202). In the exemplary embodiment, each ESB node 12 stores the state information of the other ESB nodes 12 in its corresponding distributed registry 14A-14E. Each of the ESB nodes 12 then use their respective distributed registry 14A-14E to make service message routing decisions when routing service requests between the service instances 18A-18I (block 204).

The advertisement messages sent from each of the ESB nodes 12 share the ESB node's service state data from each of the node's respective distributed service registry 14. According to the exemplary embodiment, the amount of service state data from the distributed service registry 14 that is shared with each ESB node 12 member of the federation is configurable via policy; which is referred to as policy-based service advertisement. Policy-based service advertisement allows different members of the federation to have different views of hosted services 18 at a particular ESB node 12 in the federation. In one embodiment, the policy-based service advertisement may be configured to define that certain services 18 are only exposed to certain ESB nodes 12 in the federation, and that the advertisement of particular services 18 are either allowed or disallowed. Thus, predetermined policy decisions determine how the ESB nodes 12 of one ESB deployment 10 are configured to send advertisement messages to other ESB deployments 10, and therefore determine the overall topology of the resultant ESB federation and the peer relationships of the ESB nodes 12 therein.

One result of ESB federation is that it may provide a logically centralized (at an appropriate scope) integration platform across different geographic and business boundaries, such that the topology formed by the federation of ESB deployments 10 may align directly to the structure of entities within an enterprise.

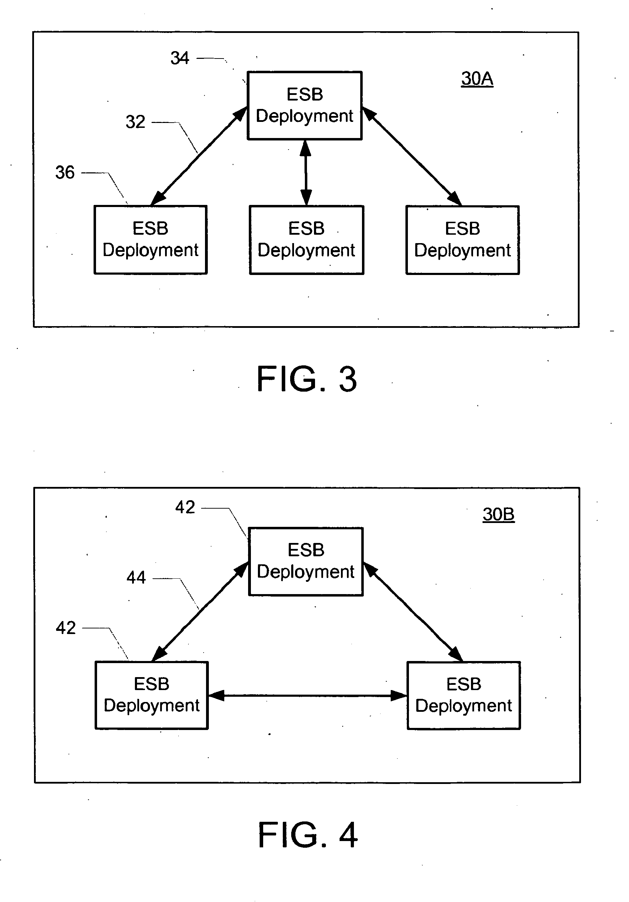

FIGS. 3 and 4 are diagrams showing example topologies for ESB federations 30A and 30B (collectively, ESB federations 30) that may align with common business structures. FIG. 3 shows the logical topology of a hub/spoke federated ESB 30A. In the hub/spoke federated ESB 30A, advertisement messages 32 are transmitted between a hub ESB deployment 34 and spoke ESB deployments 36. That is, some or all of the ESB nodes 12 in the spoke ESB deployment 36 may send advertisement messages 32 and service requests to some or all of the ESB nodes 12 contained in the hub ESB deployment 34, but not to the ESB nodes 12 contained in the other spoke ESB deployments 36. This type of topology may directly align with a Store/Branch business structure, and may force all service routing to be done through the hub ESB deployment 34.

FIG. 4 shows the logical topology of a directly-connected federated ESB 30B. In the directly-connected federated ESB 30B, all ESB deployments 42 transmit advertisement messages 44 directly to one another, so that service requests that are routed within the federation 30B pass directly from a source ESB deployment 42 to a destination ESB deployment 42. That is, some or all of the ESB nodes 12 in each of the ESB deployments 42 may transmit advertisement messages 44 and service requests to some or all of the ESB nodes 12 in all of the other ESB deployments 42. This type of topology directly aligns with the Multiple Geographies & Multiple Business Divisions business structures.

The exemplary embodiment may overcome manual configuration approaches to federating ESBs by utilizing a protocol to disseminate service data dynamically by allowing each ESB node 12 to distribute its local state information throughout the federation 30 through the use of advertisement messages, thus enabling a federated environment that is flexible to changes in service availability. In addition, the distributed service registry 14 may minimize scalability and reliability issues and enable the ESB nodes 12 to communicate together in order to provide a seamless policy-driven integration platform.

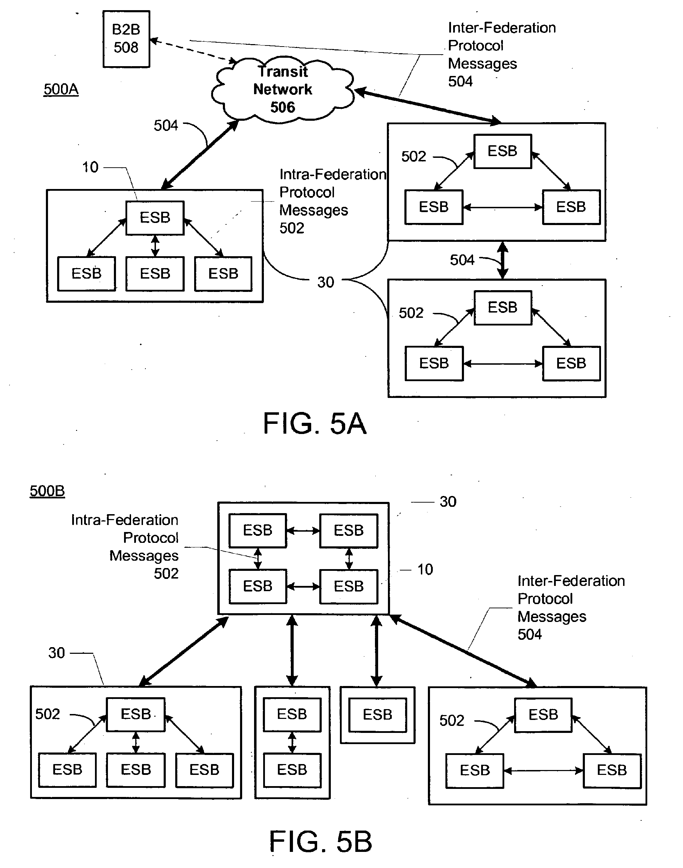

FIGS. 5A and 5B are block diagrams illustrating example topologies of interconnected federated ESB deployments 500A and 500B, which may be referred to as simply interconnected ESB federations 500A and 500B (and collectively as an interconnected ESB federation 500). FIG. 5A shows an example of an interconnected ESB federation 500A where several ESB federations 30 are interconnected in a business-to-business environment. Within each ESB federation 30, policy-based service advertisement messages are transmitted between ESB deployments 10, as described above. Such policy-based service advertisement messages transmitted within ESB federations 30 are controlled by an Intra-Federation protocol, and are referred to as Intra-Federation advertisement messages 502. According to the exemplary embodiment, policy-based service advertisement messages may also be transmitted between ESB federations 30, which are controlled by an Inter-Federation protocol, and are referred to as Inter-Federation advertisement messages 504. In this particular example, for instance, Inter-Federation advertisement messages 504 are sent through a transit network 506 to a B2B 508, and also between a hierarchical set of ESB federations 30.

In one embodiment, the Intra-Federation routing/management protocol may be implemented similar to an Open Shortest Path First routing protocol and may be built atop a Web Services Distributed Management (WSDM) framework. A reliable messaging infrastructure, such as WS-ReliableMessaging or WSRM could be utilized to ensure delivery of messages between federation ESB node 12 members. Also, a security mechanism, such as mutually authenticated SSL, could be used to ensure that communication only occurs between actual federation members.

In one embodiment, the Inter-Federation routing/management protocol may be implemented similar to a Border Gateway routing protocol and may be built atop a Web Services Distributed Management (WSDM) framework. A reliable messaging infrastructure, such as WS-ReliableMessaging or WSRM could be utilized to ensure delivery of messages between federation ESB node 12 members. Also, a security mechanism, such as mutually authenticated SSL, could be used to ensure that communication only occurs between actual federation members.

FIG. 5B shows an example interconnected ESB federation 500B in a large enterprise environment having disparate federated ESB deployments. Once again, Intra-Federation advertisement messages 502 are shown transmitted within each ESB federation 30, while Inter-Federation advertisement messages 504 are shown transmitted between the ESB federations 30, in this case, between a hub ESB federation 30 and spoke ESB federations 30.

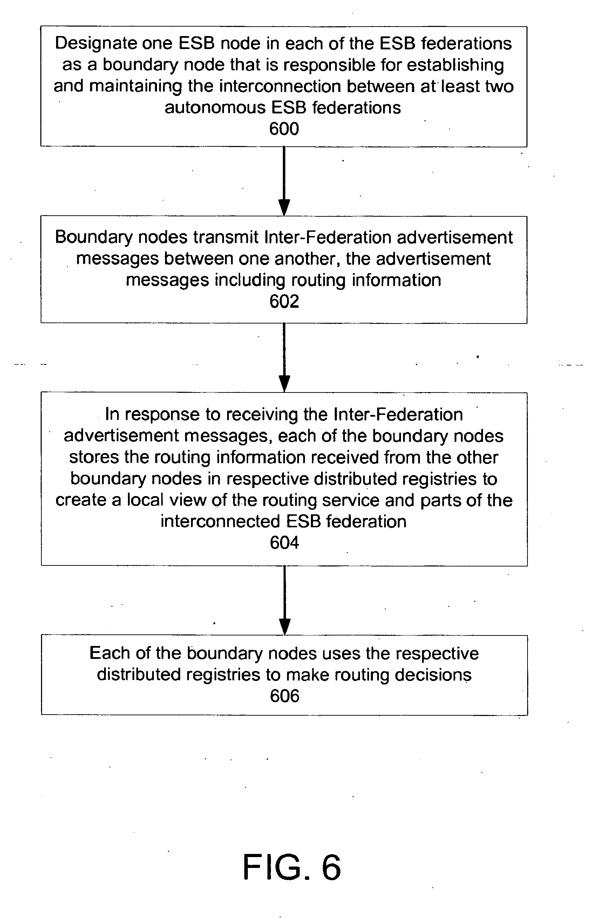

FIG. 6 is a flow diagram illustrating a process for creating an interconnection between autonomous ESB federations. Once a system architect or some other type of administrator implements the policy-based service advertisement function that defines the federation topology, and after the peering relationships between the interconnected ESB federations 30 (and their ESB nodes 12) are then extracted from the topology of the interconnected ESB federations 30, the routing/management protocol begins to run at each federation member ESB node 12, as described above, to implement the Intra-Federation protocol. According to the exemplary embodiment of the protocol, the process for creating the interconnection between the ESB federations begins by designating an ESB node 12 in each of the ESB federations 30 as a boundary node that is responsible for establishing and maintaining an interconnection between at least two autonomous ESB federations (block 600).

Once the boundary nodes in each of the ESB federations 30 have been designated, the boundary nodes transmit Inter-Federation advertisement messages between one another, where the advertisement messages 504 include routing information (block 602). In response to receiving the Inter-Federation advertisement messages 504, each of the boundary nodes stores the routing information received from the other boundary nodes in respective distributed registries 14 to create a local view of the routing service and parts of the interconnected ESB federation 500 (block 604). Each of the boundary nodes then uses the respective distributed registries 14 to make routing decisions (block 606).

According to the exemplary embodiment, the Inter-Federation routing/management protocol may have a plurality of different advertisement message types to establish and maintain the interconnection between two autonomous ESB federations 30. For example, the Inter-Federation routing/management protocol may be implemented with four main types of advertisement messages, including an Open message, an Update message, a Keepalive message, and a Notification message.

The Open message may be the first message exchanged between two boundary nodes, and may be used to establish a connection between the boundary nodes in the interconnected federation 500. The Open message may also provide a mechanism to detect if a boundary node is currently reachable or not so that the distributed registry 14 can be updated appropriately. The Open message may also be used in the case where a boundary node suffers failure in order to request a current update of the distributed registry, including any changes that occur during the failure.

The Update message may be used to convey routing information between the boundary nodes, to share the sender's current view of the topology with the receiver, and to advertise new service availability or withdraw an unavailable service. The Update messages also may be used to advertise routes to individual or aggregated services. Note that the routes themselves may be calculated to optimize some criterion (which is outside the scope of this disclosure) or they can be "default" routes.

The Keepalive message may be used to maintain "reachability" between peers; reachability is the notion of knowledge of whether the end-to-end path between entities running the protocol is operating correctly. It is used to affect the routing tables built by the protocol, because if a link or an ESB node is unusable, then more service requests should not be forwarded to that particular node. The Notification message may be sent when an error condition is detected. As an example, such a message may be used by to boundary nodes to detect incompatibilities between two ESB federations.

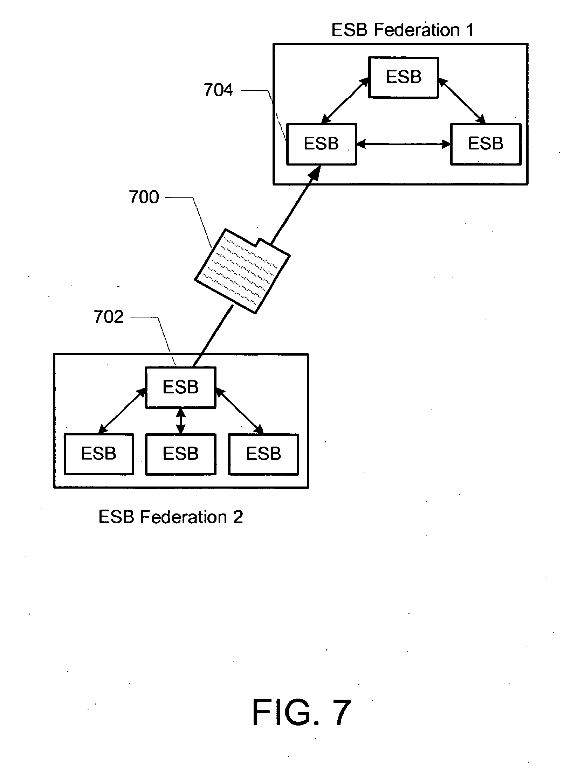

In the text below and in FIGS. 7-14, examples are provided that describe example semantics of the Inter-Federation protocol as well as example advertisement message formats, and how the protocol can be utilized to establish and maintain the distributed service registry.

FIG. 7 is a block diagram illustrating the routing/management protocol during an Open message exchange between two interconnected ESB federations. When a boundary node is defined, the boundary node sends a Open message to its peer boundary node in the other autonomous ESB federation 30. In this particular example, a boundary node 702 in ESB federation 2 sends an Open message 700 to boundary node 704 in ESB federation 1. The following is one example of the Open message 700 implemented in XML:
<?xml version=" 1.0"?>
<Open srcID="border2_ID" asdID="2">
<holdTime> 1000</holdTime>
1</Open>

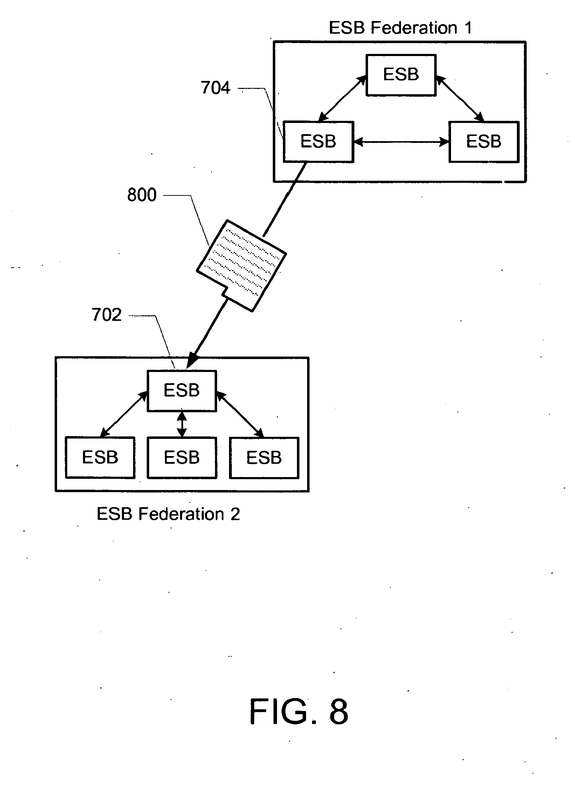

FIG. 8 is a block diagram illustrating the routing/management protocol during transmission of Keepalive message between two interconnected ESB federations. Keepalive messages may be sent periodically between boundary nodes in order to maintain state on the reachability of peer ESB federations. As shown in the example of FIG. 8, in response to boundary node 704 receiving the Open message 700 from boundary node 702, boundary node 704 acknowledges the Open message 700 by sending back to boundary node 702 a Keepalive message 800, which contains the local ID for the boundary node 704 and ESB federation 1. The following is one example of the Keepalive message 800 implemented in XML:
<?xm1 version=" 1.0"?>
<KeepAlive srcID="border1_ID" asdID="1"/>

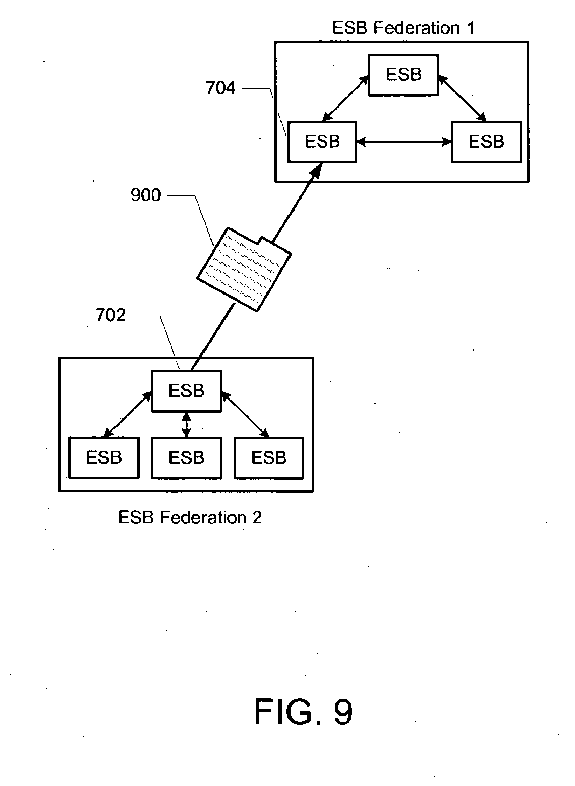

FIG. 9 is a block diagram illustrating transmission of an Update message between two interconnected ESB federations. When boundary node 702 receives the KeepAlive message 800 as an acknowledgment of its Open message 700, bidirectional communication has been established between ESB federations 2 and 1. At this point, service routing information can be exchanged between the two ESB federations. This is achieved by boundary node 702 of ESB federation 2 sending to boundary node 704 an Update message 900, which contains the available service routes from ESB federation 2. The following is one example Update message 900 implemented in XML:
<?xml version=" 1.0"?>
<Update srcID="border2_ID" asdID="2">
<WithdrawnServiceRoutes/>
<AvailableServiceRoutes>
<ServiceRoute serviceID="A">
<Origin>IFRP</amp:Origin>
<Path><ASD id="1"/></Path>
<NextHop><ASD it="1"/></NextHop>
</ServiceRoute>
<ServiceRoute serviceID="B">
<Origin>IFRP</Origin>
<Path><ASD id="1"/></Path>
<NextHop><ASD id="1"/></NextHop>
</ServiceRoute>
</AvailableServiceRoutes>
</Update>

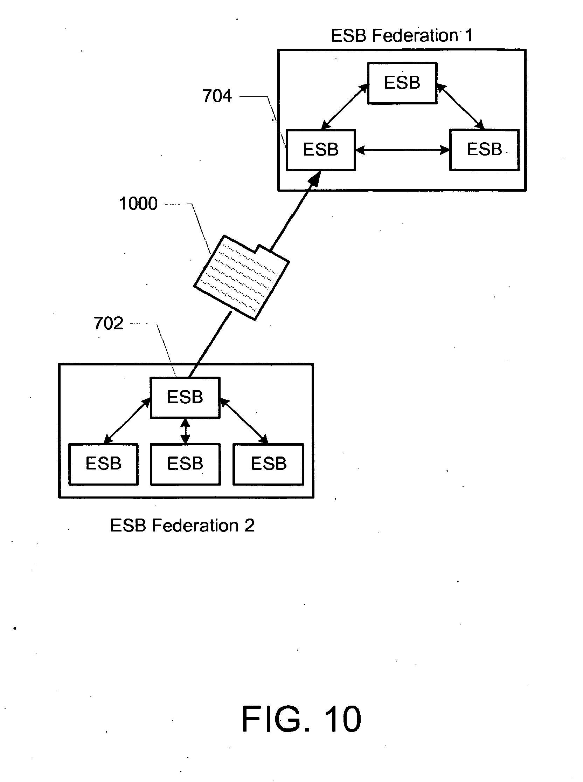

FIG. 10 is a block diagram illustrating an example of a Notification message between two interconnected ESB federations. If there is an error in the process, a Notification message is sent between the boundary nodes. In this particular example, boundary node 702 is shown sending a Notification message 1000 to boundary node 704 informing boundary node 704 of a detected error. The following is one example Notification message 1000 implemented in XML:
<?xml version="1.0"?>
<Notification srcID="border2_ID" asdID="2">
<Error>Authentication failure</Error>
</Notification>

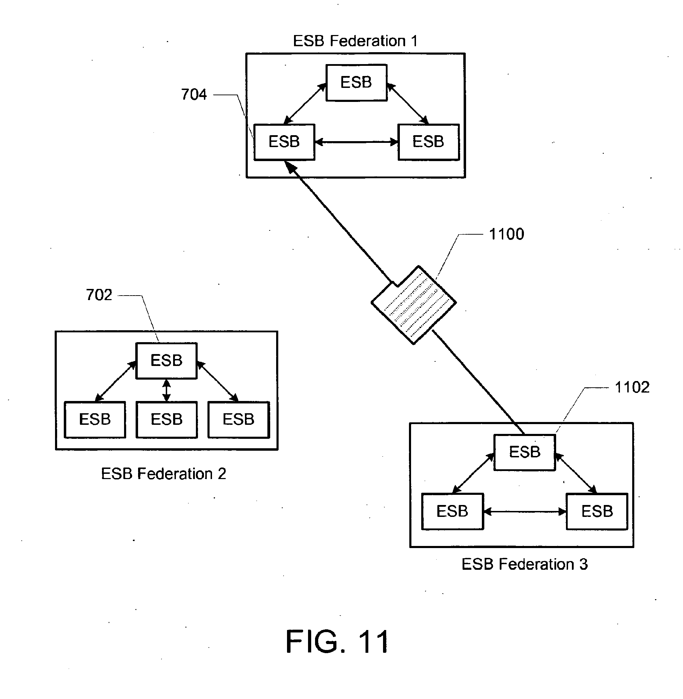

FIG. 11 is a block diagram illustrating use of the Open message between two interconnected ESB federations using a hold parameter. In this example, assume that a third ESB federation 3 wishes to interconnect with ESB federation 1. In this case, the designated boundary node 1102 of ESB federation 3 sends an Open message 1100 to the boundary node 704 of ESB federation 1. The holdTime parameter is the length of time that a boundary node should wait to receive a Keepalive message from a peer before marking the peer as unavailable. The following is one example Open message 1100 using a hold parameter implemented in XML:
<?xml version=" 1.0"?>
<Open srcID="border3_10" asdID="3">
<holdTime>1000</holdTime>
1</Open>

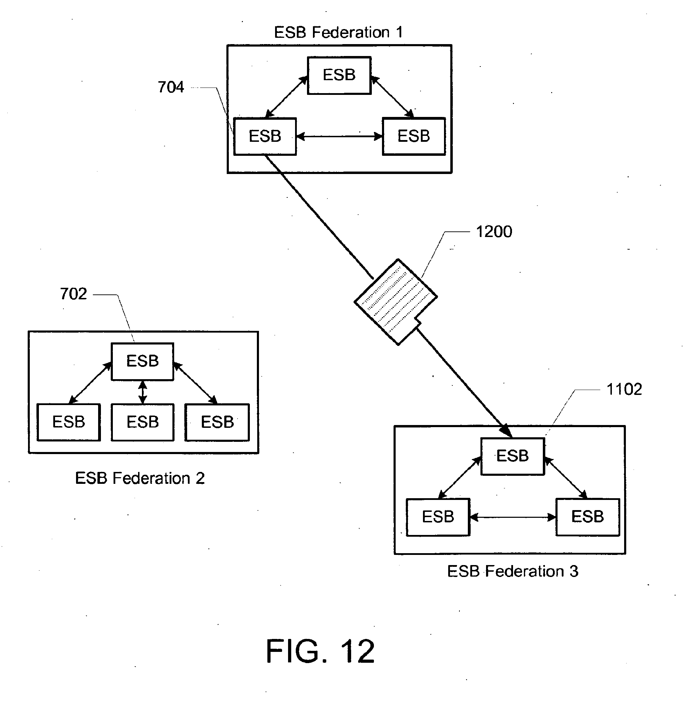

FIG. 12 is a block diagram illustrating a sequence between a Keepalive message and an Update message. Continuing with the example above, as before, the boundary node 704 responds to the Open message 1100 by sending a KeepAlive message 1200 to the boundary node 1102 of ESB federation 3.

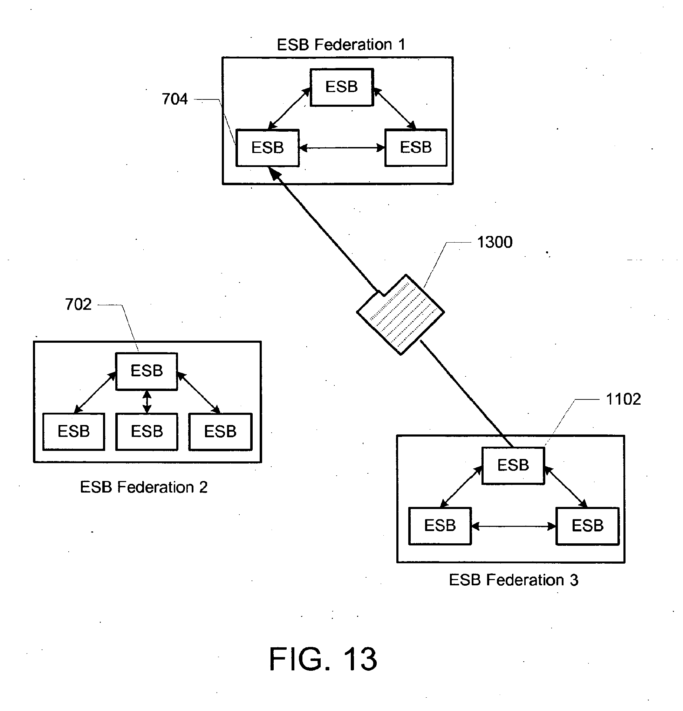

FIG. 13 is a block diagram illustrating a continuation of the sequence between the Keepalive message and an Update message. In this example, ESB federation 3 is shown advertising its service routes to ESB federation 1 by boundary node 1102 sending an Update message 1300 to boundary node 704. The following is one example Update message 1300 implemented in XML:
<?xml version=" 1.0"?>
<Update srcID="border3_ID" asdID="3">
<WithdrawnServiceRoutes/>
<AvailableServiceRoutes>
<ServiceRoute serviceID="C">
<Origin>IFRP</Origin>
<Path><ASD id="3"/></Path>
<NextHop><ASD id="3"/></NextHop>
</ServiceRoute>
</AvailableServiceRoutes>
</Update>

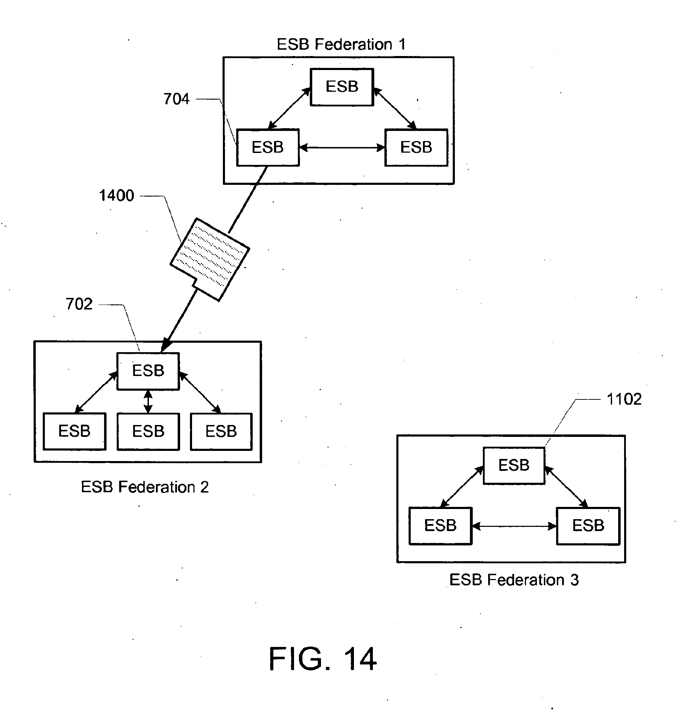

FIG. 14 is a block diagram illustrating an Update messages being sent to other ESB federations. Now that ESB federation 1 has received new service routing information from ESB federation 3, ESB federation 1 shares the new service routing information with ESB federation 2 by sending from boundary node 704 to 2's boundary node 702 an Update message 1400. The following is one example of Update message 1400 implemented in XML:
<?xml version="1.0"?>
<Update srcID="border1_ID" asdID="1">
<WithdrawnServiceRoutes/>
<AvailableServiceRoutes>
<ServiceRoute serviceID="C">
<Origin>IFRP</Origin>
<Path>
<ASD id="1"/>
<ASD id="3"/>
</Path>
<NextHop><ASD id="1"/></NextHop>
</ServiceRoute>
</AvailableServiceRoutes>
</Update>

The above show examples of how the routing/management protocol is used to create and synchronize the distributed service registry 14 between interconnected ESB federations 500.

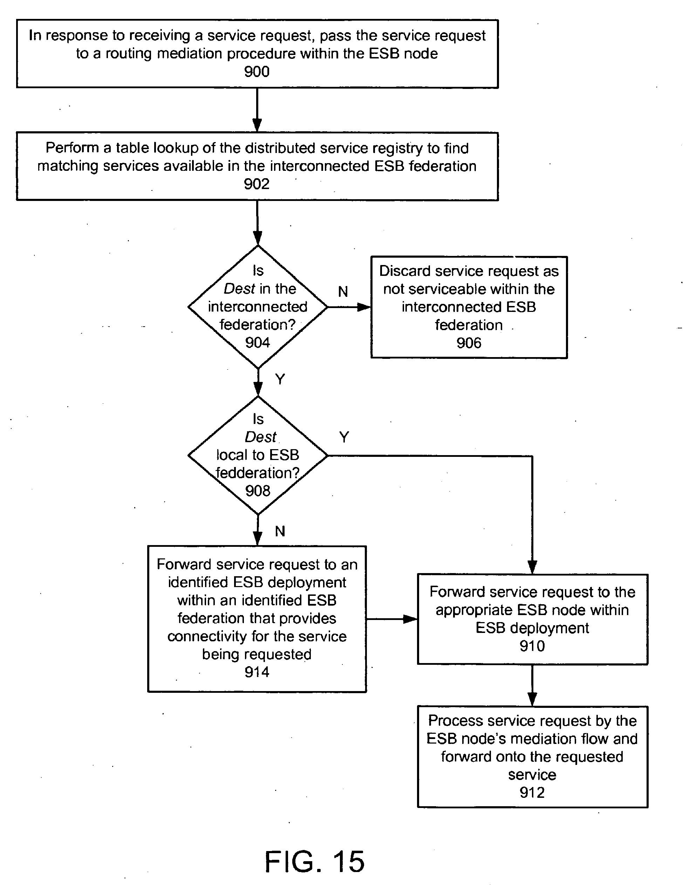

FIG. 15 is a flow diagram showing the process for using the distributed service registry 14 to enable the routing/forwarding of service requests among the interconnected ESB federations 500.

In response to one of the boundary nodes receiving a service request either directly from a service requestor or forwarded from another ESB node 12, the service request is passed to a routing mediation procedure within the boundary node (block 900). The routing mediation performs a table lookup of the distributed service registry 14 (which includes its own locally defined service connections) to find matching services 18 available in the entire interconnected ESB federation 500 and to determine a destination of where to send the service request (block 902).

It is then determined if the destination for the service request exist within the interconnected ESB federation 500 (block 904). If it is determined that a destination for the service request does not exist within the interconnected ESB federation 500, then the service request is discarded as not being serviceable within the interconnected ESB federation 500 (block 906). Otherwise, it is determined if the destination for the service request exists that is local to the boundary node's ESB federation 30, such that there is an ESB node 12 reachable in an ESB deployment 30 within the local ESB federation 30 that is appropriate for handling the service request (block 908). If so, then the service request is forwarded to the appropriate ESB node 12 within the ESB deployment 10 (block 910). The service request is then processed by the appropriate ESB node's mediation flow, and eventually forwarded onto the requested service 18 (block 912).

If it is determined that the destination for the service request exists in the interconnected ESB federation 500, but that the destination is not local to the boundary node's ESB federation 30 (block 908), then the service request is forwarded to an identified ESB deployment 10 within an identified ESB federation 30 (block 914) and then forwarded onto the appropriate ESB node 12 that provides connectivity for the particular service 18 being requested (block 910).

In one embodiment, default rules or namespace rules can be used to facilitate the routing lookup operations described in blocks 904 and 908. The advantage of such a capability would be to a) limit the amount of information in the distributed registry 14, b) allow an ESB node 12, including a boundary node, to add new services to a group that automatically get routed by other nodes 12 in the federation through an existing routing rule, c) allow intermediate nodes 12 in a complex routing topology to be entirely ignorant of some specific services - and conversely, allow owners of some specific services to receive requests for them without having to broadcast detailed knowledge about the services to ESB nodes 12 that don't need to know. One way to aggregate services could rely on an assumption that a common namespace is in use throughout the entire interconnection of federated ESBs 500 (e.g., URLs are in common use). In such a case, services can be aggregated by using any suitable "prefix" of the name describing the service.

In summary, the exemplary embodiments provide a routing/management protocol for enabling dynamic and hierarchical interconnection of autonomous federations of enterprise service buses in a dynamic and scalable manner. The protocol is based upon the concept of creating a distributed service registry 14 and may synchronize relevant service metadata amongst ESB deployments 10 as appropriate under defined business policies.

The invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem and Ethernet cards are just a few of the currently available types of network adapters.

A method and system for enabling dynamic and hierarchical interconnection of autonomous federations of enterprise service buses has been disclosed. The present invention has been described in accordance with the embodiments shown, and one of ordinary skill in the art will readily recognize that there could be variations to the embodiments, and any variations would be within the scope of the present invention. Accordingly, many modifications may be made by one of ordinary skill in the art without departing from the scope of the appended claims.

## Claims

1. A computer-implemented method for creating an interconnection between autonomous enterprise service buses (ESB) federations, each one of the ESB federations comprising at least one ESB deployment comprising a plurality of ESB nodes that provide connectivity to one or more services, the method comprising:
designating a first ESB node in each of the ESB federations as a boundary node that is responsible for establishing and maintaining an interconnection between at least two of the ESB federations (600) **characterized by**:
transmitting advertisement messages between the boundary nodes that include routing information (602);
in response to receiving the advertisement messages, storing by each of the boundary nodes, the routing information received from other boundary nodes in respective distributed registries to create a local view of routable service endpoints in the federation (604); and
using by each of the boundary nodes, the respective distributed registries to make routing decisions when routing service requests (606).

2. The method of claim 1 further comprising providing a first protocol to control the advertisement messages transmitted between the boundary nodes of ESB federations, and providing a second protocol to control policy-based service advertisement messages that are sent between at least a portion of the ESB nodes within each of the ESB federations.

3. The method of claim 1 further including a second protocol, wherein according to the second protocol, at least a portion of the ESB nodes function to:
transmit policy-based service advertisement messages to other ESB nodes, wherein the policy-based service advertisement messages include service state information;
in response to receiving the policy-based service advertisement messages, store the service state information received from other ESB nodes in the respective distributed registries to create a local view of routable service endpoints in the federation; and
use the respective distributed registries to make message routing decisions when routing service requests.

4. The method of claim 2 or 3 further comprising providing the first protocol with a plurality of different advertisement message types to establish and maintain the interconnection between the at least two ESB federations.

5. The method of claim 4 further comprising providing the first protocol with a first message type that is used to at least one of:
establish a connection between the boundary nodes;
provide a mechanism to detect if a boundary node is currently reachable or not so that the respective distributed registries can be updated appropriately;
in the case where one of the boundary nodes suffers a failure, to request a current update of the respective distributed registries, including any changes that occur during the failure.

6. The method of claim 4 or 5 further comprising providing the first protocol with a second message type that is used to at least one of:
convey routing information between the boundary nodes;
share a sender's current view of federation topology with a receiver;
advertise new service availability or withdraw an unavailable service; and advertise routes to individual or aggregated services.

7. The method of claim 4, 5 or 6 further comprising providing the first protocol with a third message type that is used to maintain reachability between peers.

8. The method of any of claims 4 to 7 further comprising providing the first protocol with a fourth message type that is sent when an error condition is detected.

9. An interconnected enterprise service bus federation system comprising:
a plurality of enterprise service bus (ESB) federations, each one of the ESB federations comprising at least one ESB deployment, the at least one ESB deployment comprising:
one or more ESB nodes, each providing connectivity to one or more services, including routing messages among the services;
a respective distributed registry maintained by each of the ESB nodes;
a boundary node in each ESB federation (702,704); and
a first protocol used by the boundary nodes, wherein according to the first protocol, the boundary nodes are **characterized by** having means to:
transmit advertisement messages between the boundary nodes that include routing information;
in response to receiving the advertisement messages, store the routing information received from other boundary nodes in the respective distributed registries to create a local view of routable service endpoints in the federation; and
use the respective distributed registries to make routing decisions when routing service requests.

10. The system of claim 9 further, wherein the first protocol controls the advertisement messages transmitted between the boundary nodes of ESB federations, and wherein a second protocol is provided to control policy-based service advertisement messages that are sent between at least a portion of the ESB nodes within each of the ESB federations.

11. The system of claim 9 further including a second protocol, wherein according to the second protocol, at least a portion of the ESB nodes function to:
transmit policy-based service advertisement messages to other ESB nodes, wherein the policy-based service advertisement messages include service state information;
in response to receiving the policy-based service advertisement messages, store the service state information received from other ESB nodes in the respective distributed registries to create a local view of routable service endpoints in the federation; and
use the respective distributed registries to make message routing decisions when routing service requests.

12. The system of claim 9, 10 or 11 wherein the first protocol is provided with a plurality of different advertisement message types to establish and maintain the interconnection between the at least two ESB federations.

13. The system of claim 12, wherein the first protocol is provided with a first message type that is used to at least one of:
establish a connection between the boundary nodes;
provide a mechanism to detect if a boundary node is currently reachable or not so that the respective distributed registries can be updated appropriately;
in the case where one of the boundary nodes suffers a failure, to request a current update of the respective distributed registries, including any changes that occur during the failure.

14. The system of claim 12 or 13, wherein the first protocol is provided with a second message type that is used to at least one of:
convey routing information between the boundary nodes;
share a sender's current view of federation topology with a receiver;
advertise new service availability or withdraw an unavailable service; and advertise routes to individual or aggregated services.

15. A computer program for creating an interconnection between autonomous enterprise service buses (ESB) federations, each one of the ESB federations comprising at least one ESB deployment comprising a plurality of ESB nodes that provide connectivity to one or more services, the computer program comprising:
instructions for designating a first ESB node in each of the ESB federations as a boundary node that is responsible for establishing and maintaining an interconnection between at least two of the ESB federations;
instructions for transmitting advertisement messages between the boundary nodes that include routing information;
instructions for, in response to receiving the advertisement messages, storing by each of the boundary nodes, the routing information received from other boundary nodes in respective distributed registries to create a local view of routable service endpoints in the federation; and
instructions for using by each of the boundary nodes, the respective distributed registries to make routing decisions when routing service requests..

## Patentansprüche

1. In einem Computer realisiertes Verfahren für das Erzeugen einer Verbindung zwischen eigenständigen Enterprise-Service-Bus- (ESB-) Verbänden, wobei jeder der ESB-Verbände mindestens eine ESB-Ausführung umfasst, die eine Vielzahl von ESB-Knoten umfasst, welche eine Verbindungsmöglichkeit zu einem oder mehreren Diensten bereitstellen, wobei das Verfahren Folgendes umfasst:
Festlegen eines ersten ESB-Knotens in jedem der ESB-Verbände als Grenzknoten, der für die Herstellung und Aufrechterhaltung einer Verbindung zwischen mindestens zwei der ESB-Verbände zuständig ist (600), **gekennzeichnet durch**:
das Übertragen von Ankündigungsnachrichten, die Weiterleitungsdaten enthalten, zwischen den Grenzknoten (602);
als Reaktion auf das Empfangen der Ankündigungsnachrichten das Speichern der von anderen Grenzknoten empfangenen Weiterleitungsdaten in betreffenden verteilten Registern durch jeden der Grenzknoten, um eine lokale Ansicht der weiterleitbaren Dienstendpunkte in dem Verband zu erzeugen (604); und
das Verwenden der betreffenden verteilten Register **durch** jeden der Grenzknoten, um beim Weiterleiten von Dienstanforderungen Weiterleitungsentscheidungen zu treffen (606).

2. Verfahren nach Anspruch 1, das des Weiteren das Bereitstellen eines ersten Protokolls zur Steuerung der zwischen den Grenzknoten der ESB-Verbände übertragenen Ankündigungsnachrichten und das Bereitstellen eines zweiten Protokolls zur Steuerung von richtlinienbasierten Dienstankündigungsnachrichten umfasst, die zwischen mindestens einem Teil der ESB-Knoten innerhalb eines jeden der ESB-Verbände gesendet werden.

3. Verfahren nach Anspruch 1, das ferner ein zweites Protokoll beinhaltet, wobei gemäß dem zweiten Protokoll mindestens ein Teil der ESB-Knoten dazu dient:
richtlinienbasierte Dienstankündigungsnachrichten an andere ESB-Knoten zu übertragen, wobei die richtlinienbasierten Dienstankündigungsnachrichten Dienstzustandsdaten beinhalten;
als Reaktion auf das Empfangen der richtlinienbasierten Dienstankündigungsnachrichten die von anderen ESB-Knoten empfangenen Dienstzustandsdaten in den betreffenden verteilten Registern zu speichern, um eine lokale Ansicht von weiterleitbaren Dienstendpunkten in dem Verband zu erzeugen; und
die betreffenden verteilten Register dazu zu verwenden, beim Weiterleiten von Dienstanforderungen Entscheidungen zur Nachrichtenweiterleitung zu treffen.

4. Verfahren nach Anspruch 2 oder 3, das des Weiteren das Bereitstellen des ersten Protokolls mit einer Vielzahl unterschiedlicher Typen von Ankündigungsnachrichten umfasst, um die Verbindung zwischen den mindestens zwei ESB-Verbänden herzustellen und aufrechtzuerhalten.

5. Verfahren nach Anspruch 4, das des Weiteren das Bereitstellen des ersten Protokolls mit einem ersten Nachrichtentyp umfasst, der für mindestens eines des Folgendenverwendet wird:
Herstellen einer Verbindung zwischen den Grenzknoten;
Bereitstellen eines Mechanismus, um zu erkennen, ob ein Grenzknoten momentan erreichbar ist, sodass die betreffenden verteilten Register entsprechend aktualisiert werden können;
falls einer der Grenzknoten ausfallen sollte, Anfordern einer aktuellen Aktualisierung der betreffenden verteilten Register einschließlich etwaiger Änderungen, die während des Ausfalls stattfinden.

6. Verfahren nach Anspruch 4 oder 5, das des Weiteren das Bereitstellen des ersten Protokolls mit einem zweiten Nachrichtentyp umfasst, der für mindestens eines des Folgenden verwendet wird:
Befördern von Weiterleitungsdaten zwischen den Grenzknoten;
Teilen einer momentanen Ansicht, die der Sender von der Verbandstopologie hat, mit einem Empfänger;
Ankündigen der Verfügbarkeit eines neuen Dienstes oder Entfernen eines nicht verfügbaren Dienstes; und
Ankündigen von Leitwegen zu einzelnen oder zusammengefassten Diensten.

7. Verfahren nach Anspruch 4, 5 oder 6, das des Weiteren das Bereitstellen des ersten Protokolls mit einem dritten Nachrichtentyp umfasst, der verwendet wird, um die Erreichbarkeit zwischen gleichrangigen Elementen aufrechterhalten.

8. Verfahren nach einem beliebigen der Ansprüche 4 bis 7, das des Weiteren das Bereitstellen des ersten Protokolls mit einen vierten Nachrichtentyp umfasst, der gesendet wird, wenn eine Fehlerbedingung erkannt wird.

9. System aus miteinander verbundenen ESB-Verbänden, das Folgendes umfasst:
eine Vielzahl von ESB-Verbänden, wobei jeder der ESB-Verbände mindestens eine ESB-Ausführung umfasst, wobei die mindestens eine ESB-Ausführung Folgendes umfasst:
einen oder mehrere ESB-Knoten, von denen jeder eine Verbindungsmöglichkeit zu einem oder mehreren Diensten einschließlich der Weiterleitung von Nachrichten zwischen den Diensten umfasst;
ein entsprechendes verteiltes Register, das von jedem der ESB-Knoten verwaltet wird;
einen Grenzknoten in jedem ESB-Verband (702, 704); und
ein erstes Protokoll, das von den Grenzknoten verwendet wird, wobei gemäß dem ersten Protokoll die Grenzknoten **dadurch gekennzeichnet sind, dass** sie über ein Mittel verfügen, um:
Ankündigungsnachrichten, die Weiterleitungsdaten enthalten, zwischen den Grenzknoten zu übertragen;
als Reaktion auf das Empfangen der Ankündigungsnachrichten die von anderen Grenzknoten empfangenen Weiterleitungsdaten in den betreffenden verteilten Registern zu speichern, um eine lokale Ansicht von weiterleitbaren Dienstendpunkten in dem Verband zu erzeugen; und
die betreffenden verteilten Register dazu zu verwenden, beim Weiterleiten von Dienstanforderungen Weiterleitungsentscheidungen zu treffen.

10. System nach Anspruch 9, wobei das erste Protokoll ferner die zwischen den Grenzknoten von ESB-Verbänden übertragenen Ankündigungsnachrichten steuert und wobei ein zweites Protokoll bereitgestellt wird, um richtlinienbasierte Dienstankündigungsnachrichten bereitzustellen, die zwischen mindestens einem Teil der ESB-Knoten innerhalb eines jeden der ESB-Verbände gesendet werden.

11. System nach Anspruch 9, das ferner ein zweites Protokoll beinhaltet, wobei gemäß dem zweiten Protokoll mindestens ein Teil der ESB-Knoten dazu dient:
richtlinienbasierte Dienstankündigungsnachrichten an andere ESB-Knoten zu übertragen, wobei die richtlinienbasierten Dienstankündigungsnachrichten Dienstzustandsdaten beinhalten;
als Reaktion auf das Empfangen der richtlinienbasierten Dienstankündigungsnachrichten die von anderen ESB-Knoten empfangenen Dienstzustandsdaten in den betreffenden verteilten Registern zu speichern, um eine lokale Ansicht von weiterleitbaren Dienstendpunkten in dem Verband zu erzeugen; und
die betreffenden verteilten Register dazu zu verwenden, beim Weiterleiten von Dienstanforderungen Entscheidungen zur Nachrichtenweiterleitung zu treffen.

12. System nach Anspruch 9, 10 oder 11, wobei das erste Protokoll mit einer Vielzahl von unterschiedlichen Ankündigungsnachrichtentypen bereitgestellt wird, um die Verbindung zwischen den mindestens zwei ESB-Verbänden herzustellen und aufrechtzuerhalten.

13. System nach Anspruch 12, wobei das erste Protokoll mit einem ersten Nachrichtentyp bereitgestellt wird, der für mindestens eines des Folgenden verwendet wird:
Herstellen einer Verbindung zwischen den Grenzknoten;
Bereitstellen eines Mechanismus, um zu erkennen, ob ein Grenzknoten momentan erreichbar ist, sodass die betreffenden verteilten Register entsprechend aktualisiert werden können;
falls einer der Grenzknoten ausfallen sollte, Anfordern einer aktuellen Aktualisierung der betreffenden verteilten Register einschließlich etwaiger Änderungen, die während des Ausfalls stattfinden.

14. System nach Anspruch 12 oder 13, wobei das erste Protokoll mit einem zweiter Nachrichtentyp bereitgestellt wird, der für mindestens eines des Folgenden verwendet wird:
Befördern von Weiterleitungsdaten zwischen den Grenzknoten;
Teilen einer momentanen Ansicht, die der Sender von der Verbandstopologie hat, mit einem Empfänger;
Ankündigen der Verfügbarkeit eines neuen Dienstes oder Entfernen eines nicht verfügbaren Dienstes; und
Ankündigen von Leitwegen zu einzelnen oder zusammengefassten Diensten.

15. Computerprogramm für das Erzeugen einer Verbindung zwischen eigenständigen ESB-Verbänden, wobei jeder der ESB-Verbände mindestens eine ESB-Ausführung umfasst, die eine Vielzahl von ESB-Knoten umfasst, welche eine Verbindungsmöglichkeit zu einem oder mehreren Diensten bereitstellen, wobei das Computerprogramm Folgendes umfasst:
Befehle für das Festlegen eines ersten ESB-Knotens in einem jedem der ESB-Verbände als Grenzknoten, der für die Herstellung und Aufrechterhaltung einer Verbindung zwischen mindestens zwei der ESB-Verbände zuständig ist;
Befehle für das Übertragen von Ankündigungsnachrichten, die Weiterleitungsdaten enthalten, zwischen den Grenzknoten;
Befehle, um als Reaktion auf das Empfangen der Ankündigungsnachrichten die von anderen Grenzknoten empfangenen Weiterleitungsdaten durch einen jeden der Grenzknoten in betreffenden verteilten Registern speichern zu lassen, um eine lokale Ansicht der weiterleitbaren Dienstendpunkte in dem Verband zu erzeugen; und
Befehle, um die betreffenden verteilten Register durch jeden der Grenzknoten verwenden zu lassen, um beim Weiterleiten von Dienstanforderungen Weiterleitungsentscheidungen zu treffen.

## Revendications

1. Procédé mis en oeuvre par ordinateur destiné à créer une interconnexion entre des fédérations de bus de services d'entreprise autonomes (ESB), chacune des fédérations de bus ESB comprenant au moins un déploiement de bus ESB comprenant une pluralité de noeud de bus ESB qui fournissent une connectivité vers un ou plusieurs services, le procédé comprenant l'étape consistant à :
désigner un premier noeud de bus ESB dans chacune des fédérations de bus ESB comme noeud limite qui est responsable d'établir et de maintenir une interconnexion entre au moins deux des fédérations de bus ESB (600), **caractérisé par** les étapes consistant à :
transmettre des messages d'annonce entre les noeuds limites qui comprennent des informations de routage (602),
en réponse à la réception de messages d'annonce, mémoriser par le biais de chacun des noeuds limites, les informations de routage reçues d'autres noeuds limites dans des registres répartis respectifs pour créer une vision locale de points d'extrémité de services routables dans la fédération (604), et
utiliser par le biais de chacun des noeuds limites, les registres répartis respectifs pour prendre des décisions de routage lors du routage de demandes de services (606).

2. Procédé selon la revendication 1, comprenant en outre le fait de fournir un premier protocole pour commander les messages d'annonce transmis entre les noeuds limites des fédérations de bus ESB, et le fait de fournir un deuxième protocole pour commander des messages d'annonce de services basés sur une politique qui sont envoyés entre au moins une partie des noeuds de bus ESB à l'intérieur de chacune des fédérations de bus ESB.

3. Procédé selon la revendication 1, comprenant en outre un deuxième protocole, où, conformément au deuxième protocole, au moins une partie des noeuds de bus ESB fonctionnent pour :
transmettre des messages d'annonce de services basés sur une politique à d'autres noeuds de bus ESB, où les messages d'annonce de services basés sur une politique comprennent des informations d'état de services,
en réponse à la réception des messages d'annonce de services basés sur une politique, mémoriser les informations d'état de services reçues d'autres noeuds de bus ESB dans les registres répartis respectifs pour créer une vision locale de points d'extrémité de services routables dans la fédération, et
utiliser les registres répartis respectifs pour prendre des décisions de routage de messages lors du routage de demandes de services.

4. Procédé selon la revendication 2 ou 3, comprenant en outre le fait de fournir au premier protocole une pluralité de types de messages d'annonce différents pour établir et maintenir l'interconnexion entre au moins deux fédérations de bus ESB.

5. Procédé selon la revendication 4, comprenant en outre le fait de fournir au premier protocole un premier type de message qui est utilisé pour au moins l'une des actions suivantes :
établir une connexion entre les noeuds limites,
fournir un mécanisme pour détecter si un noeud limite est actuellement atteignable ou non de sorte que les registres répartis respectifs puissent être mis à jour de manière appropriée,
dans le cas où l'un des noeuds limites souffre d'une défaillance, demander une mise à jour actuelle des registres répartis respectifs, y compris tout changement qui se produit au cours de la défaillance.

6. Procédé selon la revendication 4 ou 5, comprenant en outre le fait de fournir au premier protocole un deuxième type de message qui est utilisé pour au moins l'une des actions suivantes :
acheminer des informations de routage entre les noeuds limites, partager une vision actuelle d'expéditeur d'une topologie de fédération avec un destinataire,
avertir d'une nouvelle disponibilité de service ou du retrait d'un service non disponible, et avertir des routes vers des services individuels ou agrégés.

7. Procédé selon la revendication 4, 5 ou 6, comprenant en outre le fait de fournir au premier protocole un troisième type de message qui est utilisé pour maintenir la possibilité d'être atteints entre homologues.

8. Procédé selon l'une quelconque des revendications 4 à 7, comprenant en outre le fait de fournir au premier protocole un quatrième type de message qui est envoyé lorsqu'une condition d'erreur est détectée.

9. Système de fédération de bus de services d'entreprise interconnecté, comprenant :
une pluralité de fédérations de bus de services d'entreprise autonomes (ESB), chacune des fédérations de bus ESB comprenant au moins un déploiement de bus ESB, le au moins un déploiement de bus ESB comprenant :
un ou plusieurs noeud de bus ESB, fournissant chacun une connectivité vers un ou plusieurs services, y compris le routage de message parmi les services,
un registre réparti respectif maintenu par chacun des noeuds de bus ESB,
un noeud limite dans chaque fédération de bus ESB (702, 704), et
un premier protocole utilisé par les noeuds limites, où, conformément au premier protocole, les noeuds limites sont **caractérisés par** le fait d'avoir un moyen destiné à :
transmettre des messages d'annonce entre les noeuds limites qui comprennent des informations de routage,
en réponse à la réception de messages d'annonce, mémoriser les informations de routage reçues d'autres noeuds limites dans des registres répartis respectifs pour créer une vision locale de points d'extrémité de services routables dans la fédération, et
utiliser les registres répartis respectifs pour prendre des décisions de routage lors du routage de demandes de services.

10. Système selon la revendication 9, dans lequel le premier protocole commande les messages d'annonce transmis entre les noeuds limites des fédérations de bus ESB, et dans lequel un deuxième protocole est fourni pour commander des messages d'annonce de services basés sur une politique qui sont envoyés entre au moins une partie des noeuds de bus ESB à l'intérieur de chacune des fédérations de bus ESB.

11. Système selon la revendication 9, comprenant en outre un deuxième protocole, où, conformément au deuxième protocole, au moins une partie des noeuds de bus ESB fonctionnent pour :
transmettre des messages d'annonce de services basés sur une politique à d'autres noeuds de bus ESB, où les messages d'annonce de services basés sur une politique comprennent des informations d'état de services,
en réponse à la réception des messages d'annonce de services basés sur une politique, mémoriser les informations d'état de services reçues d'autres noeuds de bus ESB dans les registres répartis respectifs pour créer une vision locale de points d'extrémité de services routables dans la fédération, et
utiliser les registres répartis respectifs pour prendre des décisions de routage de messages lors du routage de demandes de services.

12. Système selon la revendication 9, 10 ou 11, dans lequel le premier protocole est doté d'une pluralité de types de messages d'annonce différents pour établir et maintenir l'interconnexion entre les au moins deux fédérations de bus ESB.

13. Système selon la revendication 12, dans lequel premier protocole est doté d'un premier type de message qui est utilisé pour au moins l'une des actions suivantes :
établir une connexion entre les noeuds limites,
fournir un mécanisme pour détecter si un noeud limite est actuellement atteignable ou non de sorte que les registres répartis respectifs puissent être mis à jour de manière appropriée,
dans le cas où l'un des noeuds limites souffre d'une défaillance, demander une mise à jour actuelle des registres répartis respectifs, y compris tout changement qui se produit au cours de la défaillance.

14. Système selon la revendication 12 ou 13, dans lequel le premier protocole est doté d'un deuxième type de message qui est utilisé pour au moins l'une des actions suivantes :
acheminer des informations de routage entre les noeuds limites,
partager une vision actuelle d'expéditeur d'une topologie de fédération avec un destinataire,
avertir d'une nouvelle disponibilité de service ou du retrait d'un service non disponible, et avertir des routes vers des services individuels ou agrégés.

15. Programme informatique destiné à créer une interconnexion entre des fédérations de bus de services d'entreprise autonomes (ESB), chacune des fédérations de bus ESB comprenant au moins un déploiement de bus ESB comprenant une pluralité de noeud de bus ESB qui fournissent une connectivité vers un ou plusieurs services, le programme informatique comprenant :
des instructions destinées à désigner un noeud de bus ESB dans chacune des fédérations de bus ESB comme noeud limite qui est responsable d'établir et de maintenir une interconnexion entre au moins deux des fédérations de bus ESB,
des instructions destinées à transmettre des messages d'annonce entre les noeuds limites qui comprennent des informations de routage, des instructions destinées, en réponse à la réception de messages d'annonce, à mémoriser par le biais de chacun des noeuds limites, les informations de routage reçues d'autres noeuds limites dans des registres répartis respectifs pour créer une vision locale de points d'extrémité de services routables dans la fédération, et
des instructions destinées à utiliser par le biais de chacun des noeuds limites, les registres répartis respectifs pour prendre des décisions de routage lors du routage de demandes de services (606).
